# EUROPÄISCHE PATENTSCHRIFT

(11) **EP 1 629 762 B1**
(45) Veröffentlichungstag und Bekanntmachung des Hinweises auf die Patenterteilung: **31.10.2007**
(21) Anmeldenummer: 05017759.1
(22) Anmeldetag: 16.08.2005
(51) Int. Cl.: A47L 9/22, A47L 9/20

(54) **Sauggerät mit mehreren Saugmotoren**
Suction device having a plurality of suction motors
Dispositif d'aspiration comportant plusieurs moteurs d'aspiration

(30) Priorität: 18.08.2004 DE 202004012911 U
(43) Veröffentlichungstag der Anmeldung: 01.03.2006
(73) Patentinhaber: Electrostar Schöttle GmbH & Co. KG, 73262 Reichenbach (DE)
(72) Erfinder: Bruntner, Eugen, 73278 Schlierbach (DE)
(74) Vertreter: Kohler Schmid Möbus

(56) Entgegenhaltungen:
- WO-A-85/02528
- WO-A-97/19630
- DE-B- 1 245 550
- DE-C- 595 686
- DE-C1- 4 138 223

## Beschreibung

Die Erfindung bezieht sich auf ein Sauggerät, insbesondere für Staub, mit zwei oder mehreren Saugmotoren. Die WO 85/02528 A zeigt bereits eine Ausführungsform dieser Art mit zwei mit der gleichen Luftauslassöffnung verbundenen Saugmotoren, welche die Luft über eine Lufteintrittsöffnung eines gemeinsamen Schmutzbehälters ansaugen, wobei jedem Saugmotor ein gesondertes Filter zugeordnet ist und deren Luftauslassöffnungen durch ein gemeinsames Absperrventil verschließbar sind. Sowohl die Lufteinlass- als auch die Luftauslassöffnung können dabei einzeln oder gemeinsam durch Absperrventile verschlossen werden. Im Arbeitszustand des Gerätes sind beide Ventile offen und es erfolgt ein üblicher Saugvorgang. Zur Reinigung der Filter werden jedoch beide Ventile geschlossen, wobei dann wechselweise der eine und der andere Saugmotor in Betrieb genommen werden. Die dadurch erzwungene Umluft bläst dann zunächst das eine und dann nach Umschaltung der Saugmotoren das andere Filter von innen her frei. Während der Filterreinigung besteht jedoch keine Möglichkeit, den normalen Saugvorgang weiterzuführen. Außerdem hat die Erfahrung gezeigt, dass sich die Filter trotz dieser Art der Reinigung im Laufe der Zeit immer mehr zusetzen, so dass der am laufenden Saugmotor ausgeübte Druck das jeweils andere Filter nicht mehr freiblasen kann.

Die Aufgabe der vorliegenden Erfindung ist es, mit einem Sauggerät der eingangs beschriebenen Art einerseits eine effektivere Filterreinigung zu erzielen und andererseits bei der Filterreinigung den normalen Saugbetrieb aufrechtzuerhalten.

Dies wird erfindungsgemäß dadurch erreicht, dass der Luftaustrittsöffnung jedes Saugmotors ein gesondertes, als Rückschlagventil ausgebildetes Absperrventil zugezugeordnet und jedes Filter mit einer eigenen Filterreinigungsvorrichtung versehen ist. Im normalen Arbeitsbetrieb sind alle Absperrventile geöffnet und die Motoren können entweder mit voller oder auch geringerer, bei zwei Saugmotoren insbesondere mit halber Leistung arbeiten.

Soll der Filter eines der Saugmotoren gereinigt werden, dann wird dieser stillgesetzt und sein Absperrventil schliesst sich selbsttätig durch den Unterdruck im Schmutzbehälter, welcher durch den anderen laufenden Saugmotor erzeugt wird. Dagegen bleiben das Ventil im arbeitenden Saugmotor durch den Luftdruck offen. Der andere Saugmotor arbeitet dabei mit geöffnetem Absperrventil und voller Leistung weiter, sodass der Saugvorgang ohne Unterbrechung weitergeführt werden kann. Währenddessen wird das Filter des stillgelegten Motors durch eine zusätzliche Filterreinigungsvorrichtung gesäubert. Auf diese Weise wird bei Weiterführung der normalen Saugarbeit der Reihenfolge nach das Filter jedes Saugmotors gereinigt. Dabei ist es auch möglich, mit beliebig vielen Saugmotoren zu arbeiten, da durch die Stillsetzung der übrigen deren Absperrventile automatisch geschlossen sind, so dass keine Nebenluft eintreten kann.

Nach einem weiteren Merkmal der Erfindung sind die Filterreinigungsvorrichtungen als Rüttler ausgebildet, da erfahrungsgemäß ein mechanischer Rüttelvorgang den besten Wirkungsgrad bei einer Filterreinigung aufweist. Zweckmäßigerweise ist das Sauggerät mit einer Schaltvorrichtung für die Saugmotoren ausgerüstet, wobei folgende Schaltzustände erreicht werden können:
a) beide Saugmotoren arbeiten mit voller Leistung, wobei die Absperrventile automatisch geöffnet sind.
b) beide Saugmotoren arbeiten mit geringerer, insbesondere halber Leistung. Hierbei wird die Spannung entsprechend herabgesetzt und die Absperrventile bleiben nach wie vor selbsttätig geöffnet.
c) wechselweise arbeitet mindestens ein Saugmotor mit voller Leistung während die anderen Motor mit aktivierter Filterreinigungsvorrichtung abgeschaltet sind.

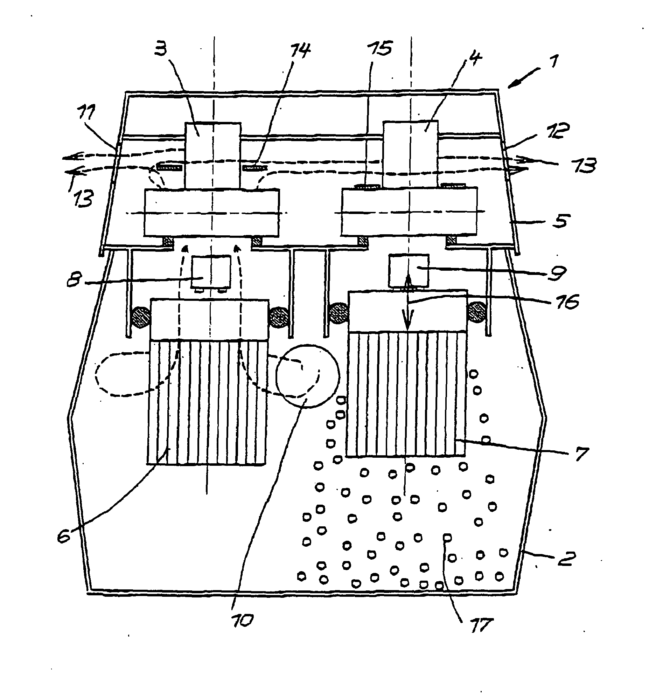

Die Zeichnung zeigt ein Ausführungsbeispiel der Erfindung, und zwar eine schematische Darstellung eines Schnitts durch ein Sauggerät mit zwei Saugmotoren.

Das Sauggerät 1 besteht aus einem Schmutzbehälter 2 und einer, die in den Schmutzbehälter 2 hineinragenden Saugmotoren 3 und 4 tragenden Haube 5. Jedem Saugmotor 3, 4 ist ein gesondertes Filter 6 und 7 zugeordnet und beide Filter 6,7 sind mit einer eigenen Rüttelvorrichtung 8,9 versehen.

Der Schmutzbehälter 2 weist eine Lufteintrittsöffnung 10 auf, während die Haube zwei Luftauslassöffnungen 11 und 12 besitzt, durch welche die von den Saugmotoren 3 und 4 angesaugte Luft 13 entweichen kann. An der Luftaustrittsöffnung jeden Saugmotors 3,4 ist als Absperrventil ein Rückschlagventil 14, 15 angeordnet.

Im Ausführungsbeispiel läuft der Saugmotor 3 mit normaler Leistung, wobei sich das Rückschlagventil 14_durch den Druck der austretenden Luft 13 selbsttätig öffnet. Der Saugmotor 4 ist dagegen stillgelegt und das Rückschlagventil 15 damit zwangsläufig durch den im Schmutzbehälter 2 vorhandenen Unterdruck geschlossen. In diesem Zustand arbeitet dann die Rüttelvorrichtung 9, welche das Filter 7 in Pfeilrichtung 16 auf und ab bewegt, so dass der Staub 17 in den Schmutzbehälter 2 fallen kann.

Der normale Saugbetrieb wird also auch bei der Filterreinigung nicht unterbrochen sondern kann mit der vollen Leistung eines Motors weitergefahren werden. Sobald der Reinigungsvorgang des Filters 7 beendet ist, erfolgt die Reinigung des anderen Filters 6 in gleicherweise, indem der Saugmotor 4 ein- und der Saugmotor 3 abgeschaltet werden. Hierbei schliessen und öffnen sich die Rückschlagventile 14 und 15 wieder selbsttätig. Nach Abschluss der Filterreinigungen werden dann beide Saugmotoren 3,4 wieder in Betrieb gesetzt, worauf sich die Rückschlagventile 14,15 öffnen und dann beide Motoren den Saugvorgang unterstützen. Dabei reicht es aus, wenn beide Motoren nur mit halber Kraft gefahren werden. Nur wenn besonders starke Staubmengen zu bewältigen sind, kann man auch beide Saugmotoren 3 und 4 mit voller Kraft laufen lassen.

## Patentansprüche

1. Sauggerät, insbesondere für Staub, mit zwei oder mehreren mit der oder den gleichen Luftauslassöffnungen (11,12) verbundenen Saugmotoren (3,4), welche die Luft über eine Lufteintrittsöffnung (10) eines gemeinsamen Schmutzbehälters (2) ansaugen, wobei jedem Saugmotor (3,4) ein gesondertes Filter (6,7) zugeordnet ist, **dadurch gekennzeichnet, dass** der Luftaustrittsöffnung jeden Saugmotors (3,4) ein gesondertes als Rückschlagventil ausgebildetes Absperrventil (14,15) zugeordnet und jedes Filter (6,7) mit einer eigenen Filterreinigungsvorrichtung (8,9) versehen ist.

2. Sauggerät nach Anspruch 1, **dadurch gekennzeichnet, dass** die Filterreinigungsvorrichtung (8,9) als Rüttler ausgebildet ist.

3. Sauggerät nach einem oder beiden der vorhergehenden Ansprüche, **gekennzeichnet durch** eine Schaltvorrichtung für die Saugmotoren für folgende Schaltzustände:
a) beide Saugmotoren (3,4) arbeiten mit voller Leistung, wobei die Absperrventile (14,15) geöffnet sind.
b) beide Saugmotoren (3,4) arbeiten mit geringerer, insbesondere halber Leistung und die Absperrventile (14,15) sind geöffnet.
c) wechselweise arbeitet mindestens ein Saugmotor (3) insbesondere mit voller Leistung und wenigstens ein Saugmotor (4) ist mit aktivierter Filterreinigungsvorrichtung (9) abgeschaltet.

## Claims

1. A suction device, especially for dust, having two or more suction motors (3, 4) which are connected to the same air outlet opening or openings (11, 12) and which aspirate the air via an air inlet opening (10) in a common dirt container (2), wherein a separate filter (6, 7) is associated with each suction motor (3, 4), **characterised in that** a separate shut-off valve (14, 15) formed as a non-return valve is associated with the air outlet opening of each suction motor (3, 4), and each filter (6, 7) is provided with its own filter cleaning device (8, 9).

2. A suction device according to claim 1, **characterised in that** the filter cleaning device (8, 9) is formed as a vibrator.

3. A suction device according to one or both of the preceding claims, **characterised by** a switching device for the suction motors for the following switching states:
a) both suction motors (3, 4) operate at full power and the shut-off valves (14, 15) are open;
b) both suction motors (3, 4) operate at reduced, especially half power and the shut-off valves (14, 15) are open;
c) in an alternate manner, at least one suction motor (3) operates, especially at full power, and at least one suction motor (4) has an activated filter cleaning device (9) and is switched off.

## Revendications

1. Dispositif d'aspiration, notamment pour de la poussière, avec deux moteurs d'aspiration (3, 4) ou davantage qui sont reliés à la ou les mêmes ouvertures de sortie d'air (11, 12) et qui aspirent l'air via une ouverture d'entrée d'air (10) d'un récipient commun d'impuretés (2), sachant qu'un filtre distinct (6, 7) est associé à chaque moteur d'aspiration (3, 4), **caractérisé en ce qu'**une soupape d'isolement distincte (14, 15) réalisée sous forme de clapet anti-retour est associée à l'ouverture de sortie d'air de chaque moteur d'aspiration (3, 4), et chaque filtre (6, 7) est pourvu d'un propre dispositif (8, 9) de nettoyage de filtre.

2. Dispositif d'aspiration selon la revendication 1, **caractérisé en ce que** le dispositif (8, 9) de nettoyage de filtre est réalisé sous forme de secoueur.

3. Dispositif d'aspiration selon la revendication 1 ou 2, **caractérisé par** un dispositif de commutation pour les moteurs d'aspiration, pour les états de commutation suivants :
a) les deux moteurs d'aspiration (3, 4) travaillent à pleine puissance, sachant que les soupapes d'isolement (14, 15) sont ouvertes,
b) les deux moteurs d'aspiration (3, 4) travaillent à puissance réduite, notamment à mi-puissance, et les soupapes d'isolement (14, 15) sont ouvertes,
c) alternativement, au moins un moteur d'aspiration (3) travaille notamment à pleine puissance, et au moins un moteur d'aspiration (4) est déconnecté avec le dispositif (9) de nettoyage de filtre activé.
